# EUROPÄISCHE PATENTSCHRIFT

(11) **EP 0 342 548 B1**
(45) Veröffentlichungstag und Bekanntmachung des Hinweises auf die Patenterteilung: **21.09.1994**
(21) Anmeldenummer: 89108608.4
(22) Anmeldetag: 12.05.1989
(51) Int. Cl.: B61L 1/16, H02G 3/08

(54) **Verschliessbares Gehäuse**
Lockable casing
Coffret qu'on peut fermer

(30) Priorität: 20.05.1988 DE 8806675 U
(43) Veröffentlichungstag der Anmeldung: 23.11.1989
(73) Patentinhaber: SIEMENS AKTIENGESELLSCHAFT, 80333 München (DE)
(72) Erfinder: Kliemt, Heinz-Günter, D-3152 Ilsede (DE)

(56) Entgegenhaltungen:
- AU-B- 58 542
- DE-A- 3 513 538
- DE-A- 3 542 325
- GB-A- 782 796
- US-A- 4 451 693

## Beschreibung

Die Erfindung bezieht sich auf ein durch einen Deckel verschließbares Gehäuse mit mindestens einer am Deckel oder am gegenüberliegenden Gehäuseboden vorgesehenen Kabeldurchführung zur Aufnahme eines ins Gehäuseinnere führenden Kabels, wobei die Kabeldurchführung rotationssymmetrisch ausgeführt ist. Ein derartiges Gehäuse ist aus US-A-4 451 693 bekannt. Derartige Gehäuse werden z.B. im Eisenbahnwesen für die Unterbringung von Radsensoren benötigt. Diese Radsensoren sind in Schienennähe angeordnet und reagieren auf die Eisenmassen der vorüberlaufenden Fahrzeugräder. Für die Stromversorgung der Sensoren und das Weiterleiten der Sensormeldungen dienen die Adern eines Kabels, das in das Sensorgehäuse geführt und dort an die elektrischen Bauelemente der Sensoren angeschlossen ist. Das Gehäuse für die Aufnahme der Sensoren ist so auszuführen, daß ein unbeabsichtigtes Lösen des Deckels vom Gehäuse infolge von Schwingungen oder Erschütterungen auszuschließen ist.

Aufgabe der vorliegenden Erfindung ist es, ein verschließbares Gehäuse nach dem Oberbegriff des Patentanspruches 1 anzugeben, das diese Forderungen erfüllt, leicht und schnell zu montieren ist und möglichst wenig Aufwand für die Festlegung des Deckels am Gehäuse benötigt.

Die Erfindung löst diese Aufgabe durch die Merkmale des Patentanspruches 1. Vorteilhafte Aus- und Weiterbildungen des erfindungsgemäßen Gehäuses sind in den Unteransprüchen angegeben.

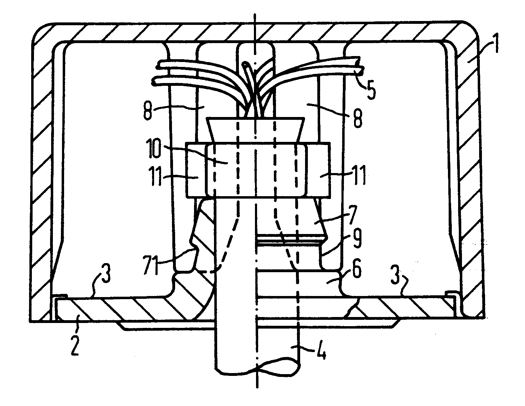

Die Erfindung ist nachstehend anhand eines in der Zeichnung dargestellten Ausführungsbeispieles näher erläutert.

Die Zeichnung zeigt in einer teilweisen Schnittdarstellung ein topf- oder kastenförmiges Gehäuse 1 für die Aufnahme nicht dargestellter elektrischer Bauelemente; für den angenommenen Anwendungsfall eines Radsensors besteht das Gehäuse aus einem magnetisch inaktiven Kunststoff. Verschlossen wird das Gehäuse durch einen von der Unterseite her auf die Gehäuseöffnung aufsetzbaren Deckel 2; dieser Deckel liegt auf im Gehäuse vorgesehenen Anschlägen 3 auf. Für die Stromversorgung der im Gehäuse 1 untergebrachten elektrischen Bauelemente und die Auswertung der Sensormeldungen dienen mehrere in einem Kabel 4 zusammengefaßte elektrische Leiter 5. Für die Aufnahme des Kabels 4 in das Gehäuse ist beispielsweise in den Deckel 2 eine Kabeldurchführung 6 integriert oder eingelassen, die rotationssymmetrisch ausgeführt ist und einen sich zu ihrem das Kabel ins Gehäuseinnere führenden Ende verjüngenden umlaufenden Wulst 7 aufweist. Gegenüber der Kabeldurchführung 6 stehen aus dem Gehäuseboden mehrere ins Gehäuseinnere weisende, kreisförmig angeordnete Rasthaken 8 vor, die über endseitige Rastnasen 9 beim Aufsetzen des Deckels 2 auf das Gehäuse 1 am Wulst 7 der Kabeldurchführung 6 nach außen auffedern, um beim Erreichen der Verschlußposition des Deckels hinter den Wulst 7 zu fassen und diesen zwischen den Rasthaken 8 formschlüssig festzulegen.

Bei entsprechend stabiler Ausgestaltung der Rasthaken und entsprechender Formgebung der Rastnasen und der Kabeldurchführung läßt sich so eine ausreichende Festhaltung des Deckels im Gehäuse erreichen. Die erreichbaren Festhaltekräfte sind abhängig außer von der Elastizität der Rasthaken 8 im wesentlichen von der Neigung der Schulterfläche 71, der Wulst 7 und der Neigung der hinter die Wulst fassenden Rastnasen 9 der Rasthaken. Je geringer die Neigung der Schulterfläche und die Neigung der Rastnasen ist, um so größer sind die Festhaltekräfte. Durch geeignete Wahl der Neigungswinkel läßt sich eine lösbare oder eine unlösbare Festlegung des Deckels am Gehäuse erreichen.

Dort, wo die im Gehäuse untergebrachten elektrischen Bauelemente zum mechanischen Schutz dieser Bauelemente mit einem Füllmaterial zu umgeben sind und wo es um eine unlösbare Be-festigung eines Deckels an einem Gehäuse geht, sieht die Erfindung in besonders vorteilhafter Weise vor, in das zu diesem Zweck um 180° gedrehte Gehäuse ein aushärtbares Füllmaterial einzufüllen, über das die hinter den Wulst der Kabeldurchführung fassenden Rasthaken nach dem Aushärten des Füllmaterials unverrückbar festzulegen sind. Die Rasthaken können hierbei weniger stark ausgebildet sein als bei einer Ausführung des Gehäuses ohne Füllmaterial. Die Schulterfläche der Wulst und die Rastnase der Rasthaken können geneigt sein, was den Vorteil einer besseren Ausformbarkeit von Kabeldurchführung und Rasthaken mit sich bringt. Als Füllmaterial kommt vorzugsweise Montageschaum in Frage. Der Montageschaum ist in das Gehäuse in bestimmter Menge einzufüllen, dann ist der Deckel aufzusetzen und anschließend ist der Deckel bis zum Aufschäumen und Aushärten des Füllmaterials an dem Gehäuse festzulegen. Nach dem Aushärten ist der Deckel unverlierbar am Gehäuse gehalten. Um zu verhindern, daß Füllmaterial zwischen dem Kabel 4 und der Kabeldurchführung 6 austritt, ist das Kabel gegen die Kabeldurchführung abzudichten. Dies kann beispielsweise dadurch geschehen, daß der Innendurchmesser der Kabeldurchführung geringfügig kleiner als der Außendurchmesser des Kabels ausgeführt wird. Das Kabel ist dann ggf. unter Verwendung eines Gleitmittels in die Kabeldurchführung einzusetzen und wird dann an seinem ins Gehäuseinnere führenden Ende durch eine Schlauchklemme 10 fixiert. Diese Schlauchklemme weist vorzugsweise zwei vorstehende Befestigungsohren 11 auf, die zwischen zwei benachbarten Rasthaken geführt sind und damit eine Drehsicherung des Kabels im Gehäuse bewirken. Derartige Schlauchklemmen sind im Handel erhältlich.

Bei dem dargestellten Ausführungsbeispiel ist angenommen worden, daß die Kabeldurchführung Bestandteil des Gehäusedeckels ist und daß die Rasthaken aus dem Gehäuseboden vorstehen. Es ist jedoch auch möglich, das Kabel über eine in das Gehäuse eingelassene oder integrierte Kabeldurchführung in das Gehäuse zu leiten und die Rasthaken am Deckel vorzusehen. Desgleichen ist es möglich, mehrere Kabel über zugeordnete Kabeldurchführungen in das Gehäuse einzuführen und jede Kabeldurchführung für sich durch Rasthaken im Gehäuse festzulegen.

## Patentansprüche

1. Durch einen Deckel (2) verschließbares Gehäuse (1) mit mindestens einer am Deckel oder am gegenüberliegenden Gehäuseboden vorgesehenen Kabeldurchführung (6) zur Aufnahme eines ins Gehäuseinnere führenden Kabels (4), wobei die Kabeldurchführung (6) rotationssymmetrisch ausgeführt ist, dadurch gekennzeichnet, daß die Kabeldurchführung (6) einen sich zu ihrem das Kabel (4) ins Gehäuseinnere führenden Ende verjüngenden umlaufenden Wulst (7) aufweist und daß aus dem Gehäuseboden bzw. dem Deckel mehrere ins Gehäuseinnere vorstehende, kreisförmig angeordnete Rasthaken (8) mit nach innen weisenden Rastnasen (9) vorgesehen sind, die beim Aufsetzen des Deckels (2) auf das Gehäuse (1) am Wulst (7) der Kabeldurchführung (6) nach außen auffedern, um beim Erreichen der Verschlußposition des Deckels (1) hinter die Schulterfläche (71) der Wulst (7) zu fassen und diesen zwischen den Rasthaken (8) formschlüssig festzulegen.

2. Verschließbares Gehäuse nach Anspruch 1, **dadurch gekennzeichnet**, daß die Kabeldurchführung ein ins Gehäuse-innere führendes Kabel (4) aufnimmt, wobei das Kabel (4) gegen die Kabeldurchführung (6) abgedichtet ist und daß in das Gehäuse (1) ein aushärtbares Füllmaterial zum unverrückbaren Festlegen der hinter den Wulst (7) der Kabeldurchführung (6) fassenden Rasthaken (8) eingebracht ist.

3. Verschließbares Gehäuse nach Anspruch 2, **dadurch gekennzeichnet,** daß als Füllmaterial Montageschaum verwendet ist.

4. Verschließbare Gehäuse nach Anspruch 1, 2 oder 3, **dadurch gekennzeichnet,** daß die Schulterfläche (71) der Wulst (7) gegenüber der Senkrechten auf der Längsachse der Wulst entgegen der Aufsteckrichtung von Deckel (2) bzw. Gehäuse (1) geneigt ist und daß die Rastnasen (9) der Rasthaken eine Anlaufschräge gegen die Schulterfläche (71) der Wulst aufweisen.

5. Verschließbares Gehäuse nach Anspruch 1, **dadurch gekennzeichnet,** daß die Kabeldurchführung ein ins Gehäuse-innere führendes Kabel (4) aufnimmt, wobei das Kabel (4) an seinem ins Gehäuseinnere führenden Ende hinter der Kabeldurchführung (6) durch eine Schlauchklemme (10) fixiert ist.

6. Verschließbares Gehäuse nach Anspruch 5, **dadurch gekennzeichnet,** daß die Schlauchklemme (10) mindestens ein vorstehendes Befestigungsohr (11) aufweist, das zwischen zwei benachbarten Rasthaken (8) geführt ist.

7. Verschließbares Gehäuse nach Anspruch 1, **dadurch gekennzeichnet,** daß der Deckel (2) auf im Gehäuse (1) vorstehenden Kanten (3) aufliegt.

## Claims

1. Casing (1) which can be closed by a cover (2) and has at least one cable bushing (6) provided on the cover or on the bottom of the casing lying opposite, in order to receive a cable (4) which leads into the inside of the casing, the cable bushing (6) being of rotationally symmetrical design, characterized in that the cable bushing (6) has a circumferential bead (7) which tapers towards its end which leads the cable (4) into the inside of the casing, and in that a plurality of locking hooks (8) which protrude from the bottom of the casing or the cover into the inside of the casing and are arranged in a circular shape are provided with inwardly pointing locking noses (9) which, when the cover (2) is fitted onto the casing (1), spring outwards at the bead (7) of the cable bushing (6) in order, when the closed position of the cover (1) is reached, to engage behind the shoulder face (71) of the bead (7) and secure the latter between the locking hooks (8) in a positively engaging fashion.

2. Lockable casing according to Claim 1, characterized in that the cable bushing receives a cable (4) which leads into the inside of the casing, the cable (4) being sealed with respect to the cable bushing (6), and in that a curable filler material is fuelled into the casing in order to secure in an immovable fashion the locking hooks (8) which engage behind the bead (7) of the cable bushing (6).

3. Lockable casing according to Claim 2, characterized in that fitting foam is used as filler material.

4. Lockable casing according to Claim 1, 2 or 3, characterized in that the shoulder face (71) of the bead (7) is inclined with respect to the perpendicular dropped onto the longitudinal axis of the bead counter to the fitting-on direction of cover (2) or casing (1), and in that the locking noses (9) of the locking hooks have a run-up slope towards the shoulder face (71) of the bead.

5. Lockable casing according to Claim 1, characterized in that the cable bushing receives a cable (4) which leads into the inside of the casing, the cable (4) being fixed, at its end which leads into the inside of the casing, behind the cable bushing (6) by means of a tube clip (10).

6. Lockable casing according to Claim 5, characterized in that the tube clip (10) has at least one protruding attachment lug (11) which is guided between two adjacent locking hooks (8).

7. Lockable casing according to Claim 1, characterized in that the cover (2) rests on edges (3) which protrude in the casing (1).

## Revendications

1. Boîtier (1) pouvant être fermé par un couvercle (2) et comportant au moins une traversée (6) de câble, prévue sur le couvercle ou sur le fond opposé du boîtier et destinée à recevoir un câble (4) passant à l'intérieur du boîtier, la traversée (6) de câble étant de révolution, caractérisé par le fait que la traversée (6) de câble comporte un bourrelet (7) qui fait tout le tour, qui se rétrécit en direction de l'extrémité qui fait passer le câble (4) à l'intérieur du boîtier, et qu'il est prévu plusieurs crochets d'encliquetage (8), qui sont répartis sur un cercle, qui s'étendent à partir du fond du boîtier ou du couvercle à l'intérieur du boîtier et qui comportent des becs d'encliquetage (9) dirigés vers l'intérieur et s'appliquant, lors de la mise en place du couvercle (2) sur le boîtier (1), élastiquement vers l'extérieur sur le bourrelet (7) de la traversée (6) de câble, de manière à s'accrocher derrière la surface d'épaulement (71) du bourrelet (7), lorsque le couvercle (1) a atteint sa position fermée, et à immobiliser, par une liaison par formes complémentaires, ce bourrelet entre les crochets d'encliquetage (8).

2. Boîtier pouvant être fermé selon la revendication 1, caractérisé par le fait que la traversée de câble reçoit un câble (4) passant à l'intérieur du boîtier, le câble (4) étant étanchéifié par rapport à la traversée (6) de câble, et qu'un matériau de remplissage durcissable est placé dans le boîtier (1), pour immobiliser à demeure les crochets d'encliquetage (8) accrochés derrière le bourrelet (7) de la traversée (6) de câble.

3. Boîtier pouvant être fermé suivant la revendication 2, caractérisé par le fait qu'on utilise comme matériau de remplissage une mousse de montage.

4. Boîtier pouvant être fermé suivant la revendication 1, 2 ou 3, caractérisé par le fait que la surface d'épaulement (71) du bourrelet (7) est inclinée par rapport à la perpendiculaire à l'axe longitudinal du bourrelet en sens opposé de la direction d'emboîtage du couvercle (2) ou du boîtier (1) et que les becs d'encliquetage (9) des crochets d'encliquetage attaquent la surface d'épaulement (71) du bourrelet par une surface inclinée.

5. Boîtier pouvant être fermé suivant la revendication 1, caractérisé par le fait que la traversée de câble reçoit un câble (4) passant à l'intérieur du boîtier, le câble (4) étant immobilisé, à son extrémité passant à l'intérieur du boîtier, en arrière de la traversée (6) de câble, par une pince (10) pour tuyau souple.

6. Boîtier pouvant être fermé suivant la revendication 5, caractérisé par le fait que la pince (10) pour tuyau souple possède au moins un tube (11) de fixation saillant, qui s'étend entre deux crochets d'encliquetage voisins (8).

7. Boîtier pouvant être fermé suivant la revendication 1, caractérisé par le fait que le couvercle (2) est appliqué sur des bords (3) qui sont en saillie à l'intérieur du boîtier (1).
